# FASCICULE DE BREVET EUROPEEN

(11) **EP 1 683 648 B1**
(45) Date de publication et mention de la délivrance du brevet: **08.06.2011**
(21) Numéro de dépôt: 05292782.9
(22) Date de dépôt: 23.12.2005
(51) Int. Cl.: B41M 7/00, B30B 15/00, B30B 15/22

(54) **Procédé et presse de lamination de substrats obtenus par impression numérique avec encre en poudre**
Verfahren und Presse zum Laminieren von mit Toner bedruckten Substraten
Process and press for laminating substrates printed with toner

(30) Priorité: 24.12.2004 FR 0413874
(43) Date de publication de la demande: 26.07.2006
(73) Titulaire: MGI FRANCE, 94200 Ivry sur Seine (FR)
(72) Inventeur: Abergel, Edmond, 75012 Paris (FR)
(74) Mandataire: Debay, Yves

(56) Documents cités:
- EP-A- 0 508 700
- EP-A- 1 340 611
- WO-A-02/18151
- DE-A1- 10 122 967
- US-A- 6 153 289
- PATENT ABSTRACTS OF JAPAN vol. 2002, no. 05, 3 mai 2002 (2002-05-03) -& JP 2002 001598 A (KINUGAWA RUBBER IND CO LTD), 8 janvier 2002 (2002-01-08)

## Description

L'invention concerne un traitement dit de lamination qui réalise un traitement thermique et mécanique, de substrats en plastique ou en papier imprimés par des encres en poudre toner , obtenus par impression numérique couleur ou autre copieur, ou encore presse numérique.

L'avantage de l'impression numérique avec encre en poudre est sa flexibilité d'adaptation, mais un des inconvénients est la difficulté de fixer de manière durable l'impression sur des documents qui sont soumis à des conditions d'utilisation exigeantes telles qu'usure, rayonnement UV etc.

C'est ainsi que le document EP 0508700 propose un système d'impression sur un substrat susceptible de laisser passer la lumière. Toutefois la méthode et le système enseignés par ce document sont spécifiques pour l'utilisation d'une encre particulière qu'est l'encre à changement de phase, solide à température ambiante et liquide à des températures élevées. De même, le EP 1340611 concerne un dispositif dont l'objet est de permettre l'obtention de températures identiques au niveau des surfaces de pression. Le document DE 10122967 se rapporte à un dispositif de mise en pression comprenant une pluralité de vérins qui déplace la surface supérieure d'une presse pour effectuer une lamination en évitant une déformation de la surface supérieure de la presse. Le document JP 2002001598 enseigne un dispositif de mise en pression capable de fournir une pression uniforme à haute température Cependant, de tel dispositif ne sont pas destinés à fonctionner dans le cadre d'un système d'impression.

Un premier but de l'invention est de proposer un procédé de lamination de tout substrat papier ou plastique obtenus par impression numérique avec encre en poudre permettant de palier les inconvénients de l'art antérieur.

Ce but est atteint par un procédé, caractérisé en ce qu'il comprend au moins les étapes suivantes :
- impression d'une image fournie par un fichier informatique sur une face d'au moins un substrat par une impression numérique avec encre en poudre,
- protection par un film des éléments venant contre la face imprimée,
- application de pression et température, avec une variation de la température et/ou de la pression, sur le substrat imprimé ou un empilage de substrats imprimés selon un cycle déterminé pour obtenir la vitrification de l'encre déposée sur le ou les substrat(s).

Selon une autre particularité, le substrat imprimé sur une face est assemblé avec un autre substrat analogue de façon à obtenir, en accolant les deux substrats côté non imprimé sur un troisième substrat intermédiaire, un produit final imprimé recto verso avec une épaisseur définie formant un assemblage, puis au moins un assemblage est placé entre deux plaques ou plateaux, et laminé avec une pression et une température contrôlées pour permettre d'obtenir une solidarisation des substrats.

Selon une autre particularité le substrat intermédiaire comporte un composant électronique actif ou passif.

Selon une autre particularité pour obtenir une vitrification de l'encre, le procédé comprend :
- une étape de mise sous une pression déterminée Pi des substrats,
- une étape de montée en température jusqu'au point de consigne Ci fixé de température,
- l'établissement d'un (Ci) ou des (Ci, C'i) paliers de température avec maintien de la température au point de consigne pendant au moins une durée définie (Ti respectivement T'i),
- un ajustement continu de la pression avec un (Pi) ou des (Pi, P'i) éventuels changement de pression pendant au moins une deuxième durée définie (ti, respectivement t'i) durant le palier de température,
- une étape de refroidissement des substrats jusqu'à une température définie,
- une étape de suppression de la pression.

Selon une autre particularité, le procédé précédemment décrit est suivi d'une étape d'enlèvement du film de protection.

Selon une autre particularité, le procédé précédemment décrit est suivi d'une étape d'application d'une couche permanente de protection.

Selon une autre particularité, au moins une consigne permet d'atteindre une température supérieure ou égale à 50°C.

Un deuxième but de l'invention est de proposer une presse pour tout substrat papier ou plastique obtenus par impression numérique avec encre en poudre permettant de palier les inconvénients de l'art antérieur.

Ce but est atteint par une presse pour document imprimé sur tout substrat plastique ou papier, par une impression numérique à encre en poudre, caractérisée en ce qu'elle comporte des moyens de traitement pour appliquer selon des cycles déterminés au moins une pression et une température définies, avec une variation de la température et/ou de la pression, pendant une durée déterminée sur un ou plusieurs substrats imprimés ou sur un empilage comportant une pluralité de substrats imprimés.

Selon une autre particularité, les moyens de traitement comportent des plateaux chauffants dont au moins un est actionné par un moyen d'appliquer une pression à l'empilage comportant des plaques de séparant entre eux les substrats imprimés.

Selon une autre particularité, les plateaux et/ou les plaques comportent au moins un aspect de surface pour façonner le document et sont protégés par un film de matériau d'une part supportant des températures de l'ordre de 200°C sans adhérer aux plateau ou aux plaques, d'autre part ayant une bonne conductibilité thermique pour assurer le chauffage des substrats et enfin ayant une faible épaisseur assurant une perméabilité perméable à l'aspect de surface de la plaque ou d'un des plateaux pour permettre la reproduction de cet aspect de surface sur le document.

Selon une autre particularité, les moyens de traitement comportent un système de contrôle commandant la presse en appliquant des consignes en température, pression et durée de chacun des paramètres répondant à un cycle défini.

Selon une autre particularité, les valeurs des paramètres déterminant le cycle, dépendent du matériau utilisé et sont mémorisés dans des moyens de mémoire du moyen de contrôle.

Selon une autre particularité, le film de protection des plateaux ou des plaques fait partie intégrante de ces derniers.

D'autres particularités et avantages de la présente invention apparaîtront plus clairement à la lecture de la description ci-après, faite en référence aux dessins annexés, dans lesquels :
La figure 1 représente la presse permettant la mise en oeuvre du procédé selon l'invention ;
La figure 2 représente le cycle de température et de pression mis en oeuvre par le procédé ;
La figure 3(a) représente un assemblage de substrats pour former un produit fini avec un document imprimé sur ses deux faces, comme représenté à la figure 4(a) ;
La figure 3 (b) représente un document réalisé sur un seul substrat imprimé ;
La figure 4 (a) représente un document imprimé double face et sans overlay ;
La figure 4 (b) représente un document imprimé seulement sur une face et sans overlay recto verso ;
La figure 5(a) représente un document imprimé double face avec overlay sur les deux faces ;
La figure 5(b) représente un document imprimé seulement sur une face et avec overlay sur une seule face.

La description de l'invention et de son fonctionnement sera faite en relation aux différentes figures.

Les assemblages (3) comprenant par exemple un substrat (31, 32, 39) en plastique ou en papier et des documents (33, 34, 40) ou des motifs imprimés sur une face du substrat (31, 32, 39), par une imprimante laser numérique, sont réceptionnés dans un magasin de sortie, puis empilés avec des plaques de séparation (50) entre chaque assemblage (3), en vue de procéder à un traitement dit de lamination de l'empilage, par une presse (1).

Dans une variante de réalisation, la presse (1) réalise un traitement de lamination sur un assemblage (3), l'assemblage étant compris, ou non, entre deux plaques (50) de séparation. De manière non limitative, un ou plusieurs assemblages ou empilages sont placés côte à côte dans une même presse (1) lors d'une opération de lamination.

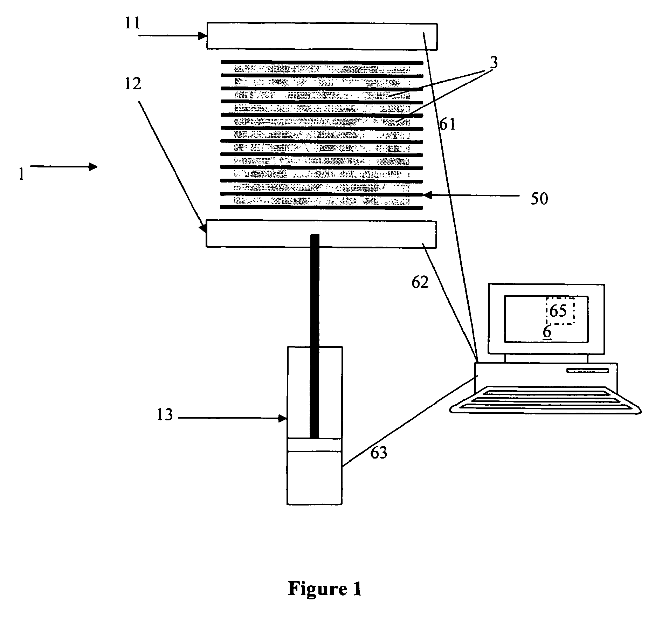

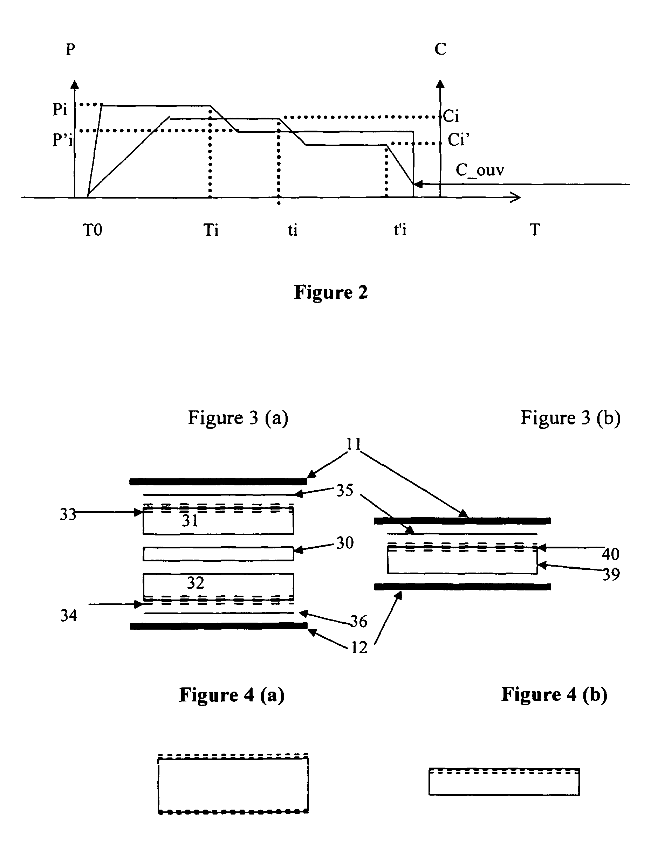

Le procédé de lamination de l'invention est réalisé avec une presse (1) telle que celle représentée figure 1, par gestion de la pression et de la température, selon par exemple des cycles (Ci, Ti, C'i, T'i; Pi, ti, P'i, t'i) tels que ceux représentés par la figure 2, pour traiter un ou plusieurs assemblages de substrats (31, 32, 39) placés entre des plaques (50). Les plaques (50) de séparation peuvent être métalliques mais aussi en d'autres matériaux tel que du Capton® du P.T.F.E ou de la fibre de verre siliconée de façon à avoir des caractéristiques mécaniques et thermiques convenant au procédé.

La figure 3(b) présente un assemblage (3) composé d'un substrat (39) associé à une couche d'encre (40), placé entre les plateaux (11, 12) de la presse (1). Un film (35) de protection du recto est placé entre l'encre (40) et le plateau (11) supérieur.

La représentation Figure 3(a) présente un assemblage (3) composé de deux substrats (31, 32) associés respectivement à un couche d'encre (33) recto et une couche d'encre (34) verso et composé également d'un substrat (30) intermédiaire. Le substrat (30) intermédiaire, ayant une épaisseur définie, permet de produire différents formats de produits finaux avec des épaisseurs définies. Avec des mêmes substrats (31, 32) imprimés, le produit final en sortie de la lamination aura une épaisseur définie variable et fonction de l'épaisseur du substrat (30) intermédiaire.

Les deux substrats, imprimés (31, 32) sur une seule face, forment respectivement le recto et le verso du document final. Le substrat intermédiaire (30) est préencollé ou de nature à produire le soudage ou le collage à chaud lors de la lamination et est intercalé entre les deux substrats (31,32) imprimés, accolées par leur face non imprimée. Lé substrat (30) intermédiaire est, de manière non limitative, une plaque fine de support ou une plaque contenant une structure métallique telle qu'une antenne ou une plaque contenant un dispositif électronique tel qu'une puce électronique. Un film (35) de protection du recto est placé entre l'encre (33) côté recto et le plateau (11) supérieur. Un film (36) de protection du verso est placé entre l'encre (34) côté verso et le plateau (11) inférieur.

Dans une variante de réalisation non représentée, un substrat imprimé est associé, de la même façon que pour un produit imprimé recto verso, à un substrat non imprimé afin d'obtenir un produit imprimé sur une seule face et d'épaisseur déterminée.

Cette opération de lamination du substrat imprimé ou d'un assemblage (3) de substrats (30, 31, 32) ou d'un empilage de plusieurs assemblages (3) permet une vitrification du toner ou de l'encre en poudre (33, 34, figure 3a ; 40, figure 3b) sur les parties imprimées. Le toner comprenant, par exemple, du carbone est amalgamé par l'application de pression et de température.

Les films (35, 36) de protection, placés contre les faces imprimées (33, 34 et 40) des substrats avant l'opération de lamination, sont utilisés une seule fois ou sont réutilisés. La fabrication des films est en effet bon marché et permet les deux types d'utilisation.

De manière non limitative, les films de protection utilisés une seule fois, restent sur le produit final afin de réaliser une protection du produit final lors du transport ou du stockage. Le ou les films de protection associés à un produit final sont, par exemple, retirés par l'utilisateur du produit ou par un opérateur avant un traitement du produit final postérieur à la lamination. Le produit final est alors sans couche de protection (sans overlay) et avec impression recto verso comme représenté par la figure 4 (a), ou avec impression sur une face (40) du substrat (39) comme représenté figure 4 (b).

La matière du film est choisie pour permettre à la fois un bon transfert thermique pour la vitrification du toner et pour protéger les plateaux (11, 12) de la presse (1) ou les plaques (50) de protection, contre des salissures par transfert de l'encre des substrats. Les films de protection sont constitués, par exemple, de polypropylène et de polyéthylène, associés de manière non limitative à d'autres composants chimiques. La composition chimique des films et la faible épaisseur des films de, par exemple, quelques micromètres, permet un rendu surfacique correspondant à l'état de surface des plateaux (11, 12) de la presse (1) ou des plaques (50) de protection. Dans une variante de réalisation un film (35 et respectivement 36) de protection est retiré d'une face après l'opération de lamination et une couche (42 et respectivement 41) de protection est collée ou soudée par pression sur une face du produit final. Une couche (41, 42) de protection est appliquée ou non sur chacune des faces du document final, en sortie de lamination.

Dans une variante de réalisation, les films de protection (35, 36) sont liés aux plateaux (11, 12) de la presse (1) ou aux plaques (50) de protection et sont conservés après chaque opération de lamination. Une couche (41, 42) de protection (overlay) est appliquée ou non sur une ou sur les faces du document final, après l'opération de lamination.

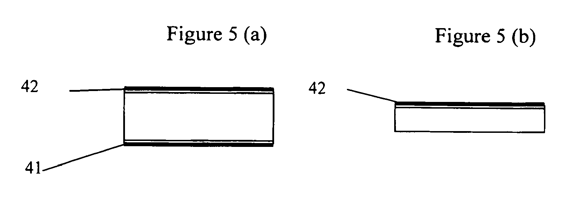

Un document avec deux couches (41, 42) de protection (overlay) recto et verso, est représenté sur la figure 5(a). Un document avec une couche (42) de protection (overlay) sur une seule face est représenté figure 5(b).

Les films (35, 36) sont d'une matière ayant d'une part une bonne conductivité thermique et d'autre part supportant des températures de l'ordre de 200°C pour permettre une vitrification de l'encre ou du toner (33, 34, et 40) et enfin permettant la protection des plaques (50). La vitrification de l'encre ou du toner s'effectue en effet à une température supérieure ou égale à 50°C.

La protection apportée par les films (35, 36) est double et permet d'une part d'éviter la salissure par transfert d'encre sur les plaques métalliques et suivant le choix du film, d'éviter l'adhérence des plateaux (11, 12) de pression ou des plaques (50) intermédiaire sur les substrats.

Les plaques (50) servent d'éléments intermédiaires entre chaque assemblage (3) de substrats selon la figure 3a ou la figure 3b, pour former un empilage à traiter en une seule opération de lamination. Le nombre d'assemblage (3) à traiter est variable de 1 à n et peut nécessiter un empilage comprenant de 2 à n+1 plaques (50) intermédiaires, qui seront placées dans un élément de maintien, par exemple un tiroir. Ces tiroirs sont ensuite positionnés entre les plateaux chauffants (11,12) de la presse (1).

La presse effectue une opération de lamination, de manière non limitative, sur 1 à n tiroirs placés entre deux plateaux chauffants.

Un tiroir de maintien d'un empilage ou un assemblage (3), tel que décrit précédemment, est placé entre deux plateaux chauffants (11,12) dont la température est contrôlée par des commandes (61, 62) provenant d'un système informatique (6) de façon à permettre des cycles (Ci, Ti ; C'i, T'i) de température tel que celui représenté à la figure 2. Les cycles de températures appliquées, en référence à la figure 2, comprennent une première consigne de température qui est appliquée aux plateaux chauffants (11, 12) pendant une durée Ti, puis une deuxième consigne de température C'i qui est appliquée pendant une durée T'i. Les plateaux (11, 12) transmettent la chaleur à un ou plusieurs empilage(s) composés d'assemblages (3) et de plaques (50). De la même façon, les plateaux (11, 12) transmettent la chaleur à un assemblage (3) unique, associé ou non à des plaques (50).

Les plateaux sont déplacés par au moins un vérin hydraulique (13) commandé par le système informatique (6) pour mettre en pression les assemblages (3) et leur appliquer les cycles de pression (Pi, ti; respectivement P'i, t'i) nécessaires à la bonne réalisation de l'opération en séquence avec la température.

Un cycle, qui dure quelques minutes, avec contrôle de température et pression est alors établi (fig. 2), c'est l'opération de lamination. La figure 2 représente des courbes présentatrices des différentes pressions (P) et des différentes températures (C) appliquées en fonction du temps (T).

Après cette opération de lamination des produits finaux sont obtenus, les produits finaux ayant des faces sur lesquelles sont réalisés des documents imprimés dont l'impression est réalisée avec toner vitrifié ou encre en poudre vitrifiée, et associés ou non à des films de de protection.

Le cycle de lamination réalisé par la presse (1) sur un empilage ou sur un assemblage (3) unique selon le type représenté à la figure 3 (a) ou selon le type représenté à la figure 3 (b) ou selon une combinaison de ces deux types comprend :
- une étape de mise sous une pression déterminée Pi des substrats,
- une étape de montée en température jusqu'au point de consigne Ci fixé de température,
- un (Ci) ou des (Ci, C'i) paliers de température avec maintien de la température au point de consigne pendant au moins une durée définie (Ti respectivement T'i),
- un ajustement continu de la pression avec un (Pi) ou des (Pi, P'i) éventuels changement de pression pendant au moins une deuxième durée définie (ti, respectivement t'i) durant le palier de température,
- une étape de refroidissement des substrats jusqu'à une température définie,
- une étape de suppression de la pression.

Les points importants sont la pression définie appliquée pendant la montée en température et lors du palier de température. Le système selon l'invention permet le contrôle simultané de la pression et de la température, la température appliquée ainsi que la pression appliquée étant commandées et variables, au cours d'une même opération de lamination. Un cycle de lamination comprend, par exemple, une montée en température jusqu'à un premier palier (Ci) avec l'application d'une pression (Pi) déterminée.

Dans une variante, un cycle de lamination comprend l'application d'une pression (P'i) déterminée et le passage d'un premier palier (Ci) de température à un deuxième palier (C'i) de température.

Dans une variante, un cycle de lamination comprend l'application d'une température (Ci) déterminée et le passage d'un premier palier (Pi) de pression à un deuxième palier (P'i) de pression.

Un cycle de lamination comprend de manière non limitative une phase de montée en pression ou en température et/ou une phase de suppression de la pression et/ou une phase de baisse en température.

Les différentes phases précédemment décrites sont combinables entre elles ou répétables, de manière non limitative.

Le système de contrôle de la presse régule les autres paramètres importants qui sont :
- la vitesse de montée en température, la valeur du point de consigne de température et,
- la ou les durées de maintien de cette température.

A titre d'exemple le cycle peut comporter l'application d'une pression Pi pendant une durée Ti correspondant au moins à la phase de montée en température définie par la consigne Ci, suivie d'une phase de régulation de la température pendant une durée ti.

Durant cette phase de régulation en température la pression appliquée peut être amenée à une autre valeur P'i supérieure ou inférieure à la première valeur de pression Pi, cette seconde valeur étant maintenue pendant une durée T'i pendant laquelle la température sera portée à une seconde valeur fixée par une seconde consigne C'i appliquée pendant une durée t'i, avant d'être ramenée à une température (C_ouv) de refroidissement et de supprimer l'application de la pression au substrat ou à la pile d'assemblages (3).

Ces différents paramètres de consigne, durée, pression et température, sont ajustés en fonction du substrat utilisé pour le document et définis par une table (65) mémorisée par le système (6) de contrôle de la presse, en fonction du type de substrat à laminer comme représenté en annexe, dans le tableau 1. Le tableau 2 en annexe, donne différents exemples de consignes en température, pression et durée, en fonction des matériaux traités. L'application d'une pression déterminée et d'une température déterminée pendant une durée déterminée, permet une vitrification du toner, c'est-à-dire, une accroche du toner sur le substrat. La pression et la température sont appliquées chacune par un premier palier ou selon plusieurs paliers.

L'innovation concerne la lamination avec protection des plaques appliquant la chaleur et la pression aux documents pour assurer une bonne vitrification et très bonne pénétration de l'encre dans la matière du substrat.

Ces plaques lorsqu'elles sont métalliques sont protégées par un film spécial, les séparant de la face imprimée du substrat.

Une des difficultés réside dans le choix du film.

Il doit être anti-adhésif et d'une épaisseur spécifique, par exemple de l'ordre de 5 à 100 microns, qui le rend perméable à l'aspect de surface de la plaque (50) utilisée pour l'opération de lamination pour permettre une reproduction de cet aspect de surface sur le document. Ceci permet par exemple d'obtenir un rendu de brillant satiné ou mat suivant l'état de surface de la plaque (50) polie ou respectivement sablée.

Le film, selon sa composition, en plus de la protection de la plaque utilisée en lamination contre d'éventuel transfert d'encre, a d'autres objectifs.

L'impression ainsi traitée par lamination du substrat résiste mieux aux rayons UV et présente une très bonne résistance à l'air libre, et aux intempéries lorsque le substrat est en plastique.

Ce film lorsqu'il est solidaire et collé sur la plaque (50) ou sur les plateaux (11, 12) ou obtenu par revêtement, est anti adhérent. Il permet dans ce cas la vitrification de l'encre en évitant le transfert d'encre tout en facilitant le nettoyage et la protection de la plaque. Les plaques peuvent être réalisées par exemple en PTFE ou capton ou fibre de verre siliconée ou autre matière anti-adhérente ayant une bonne conductibilité thermique une bonne résistance mécanique et une tenue à des températures supérieures à 200°C.

Dans le cas de produits finaux avec couche (41, 42) de protection, celle-ci peut être un overlay simple ou holographique, solidarisée par collage ou soudage au substrat après lamination.

Ces procédés de lamination avec le choix des films, des plateraux (11, 12) ou des plaques (50) spécifiques à la vitrification de l'impression numérique, peuvent s'appliquer également à tous les autres procédés d'impression avec encre en poudre ou toner ou encre solide, par exemple l'impression offset ou la sérigraphie.

Il est préférable de prévoir une plaque (50) à chaque extrémité d'un empilage composé de plaques et de substrats, pour obtenir le même état de surface sur tous les documents vitrifiés.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

### ANNEXE

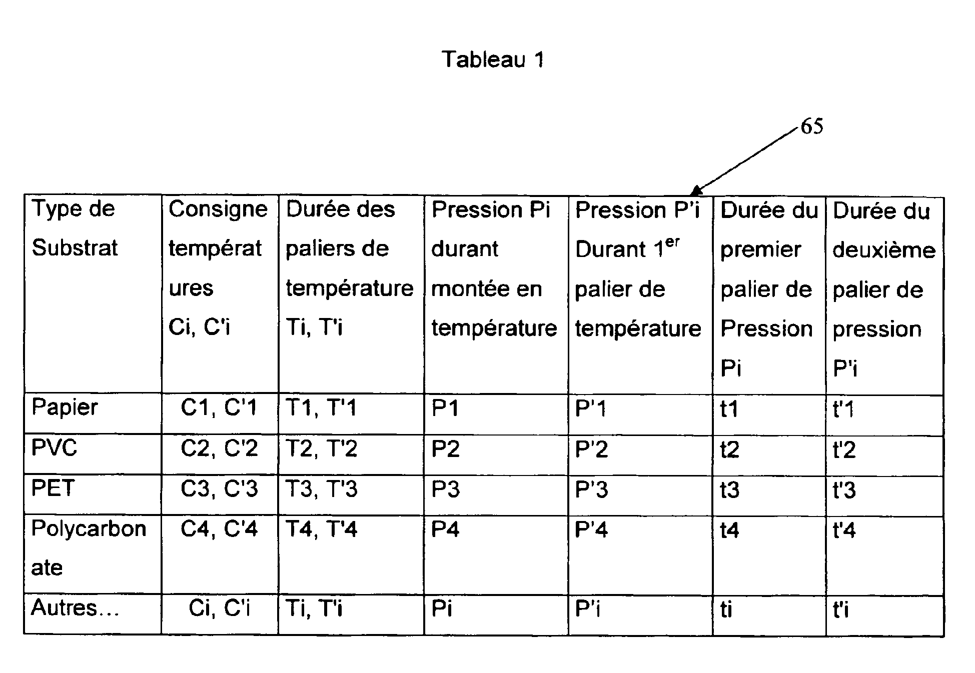

**Tableau 2**

| Type de Substrat | PALIER 1 | | PALIER 2 | |
|---|---|---|---|---|
| | Pressions et Températures | Durées appliquées | Pressions et Températures | Durées appliquées |
| Papier | | | | |
| Pressions | P1min | TP1min | P'1min | TP'1min |
| | P1max | TP1max | P'1max | TP'1max |
| Températures | C1min | TC1min | C'1min | TC'1min |
| | C1max | TC1max | C'1max | TC'1max |
| PVC | | | | |
| Pressions | P2min | TP2min | P'2min | TP'2min |
| | P2max | TP2max | P'2max | TP'2max |
| Températures | C2min | TC2min | C'2min | TC'2min |
| | C2max | TC2max | C'2max | TC'2max |
| PET | | | | |
| Pressions | P3min | TP3min | P'3min | TP'3min |
| | P3max | TP3max | P'3max | TP'3max |
| Températures | C3min | TC3min | C'3min | TC'3min |
| | C3max | TC3max | C'3max | TC'3max |
| Polycarbonate | | | | |
| Pressions | P4min | TP4min | P'4min | TP'4min |
| | P4max | TP4max | P'4max | TP'4max |
| Températures | C4min | TC4min | C'4min | TC'4min |
| | C4max | TC4max | C'4max | TC'4max |
| | | | | |
| Pressions | P1min | TP1min | P'1min | TP'1min |
| | P1max | TP1max | P'1max | TP'1max |
| Températures | C1min | TC1min | C'1min | TC'1min |
| | C1max | TC1max | C'1max | TC'1max |

## Revendications

1. Procédé de lamination de documents imprimés sur tout substrat (33, 34, 39) papier ou plastique par impression numérique avec encre en poudre, **caractérisé en ce qu'**il comprend au moins les étapes suivantes :
- impression d'une image fournie par un fichier informatique sur une face d'au moins un substrat (33, 34, 39) par une impression numérique avec encre en poudre,
- protection par un film (35, 36) des éléments (50, 11, 12) venant contre la face imprimée,
- application de pression et température, avec une variation de la température et/ou de la pression au cours d'un même cycle de lamination, sur le substrat imprimé ou un empilage de substrats imprimés selon un cycle déterminé pour obtenir la vitrification de l'encre déposée sur le ou les substrat(s).

2. Procédé selon la revendication 1 **caractérisé en ce que** le substrat (31) imprimé sur une face est assemblé avec un autre substrat (32) analogue de façon à obtenir, en accolant les deux substrats (31, 32) côté non imprimé sur un troisième substrat (30) intermédiaire, un produit final imprimé recto verso avec une épaisseur définie formant un assemblage (3), puis au moins un assemblage (3) est placé entre deux plaques (50) ou plateaux (11, 21), et laminé avec une pression et une température contrôlées pour permettre d'obtenir une solidarisation des substrats (30, 31, 32).

3. Procédé selon la revendication 2, **caractérisé en ce que** le substrat (30) intermédiaire comporte un composant électronique actif ou passif.

4. Procédé selon une des revendications 1 à 3 **caractérisé en ce qu'**il comprend :
- une étape de mise sous une pression déterminée Pi des substrats,
- une étape de montée en température jusqu'au point de consigne Ci fixé de température,
- l'établissement d'un (Ci) ou des (Ci, C'i) paliers de température avec maintien de la température au point de consigne pendant au moins une durée définie (Ti respectivement T'i),
- un ajustement continu de la pression avec un (Pi) ou des (Pi, P'i) éventuels changements de pression pendant au moins une deuxième durée définie (ti, respectivement t'i) durant le palier de température,
- une étape de refroidissement des substrats jusqu'à une température définie,
- une étape de suppression de la pression.

5. Procédé selon la revendication 4, **caractérisé en ce qu'**il est suivi d'une étape d'enlèvement du film (35, 36) de protection.

6. Procédé selon la revendication 5, **caractérisé en ce qu'**il est suivi d'une étape d'application d'une couche (41, 42) permanente de protection.

7. Procédé selon une des revendications 4 à 6, **caractérisé en ce qu'**au moins une consigne (Ci, C'i) permet d'atteindre une température supérieure ou égale à 50°C.

8. Presse pour document imprimé sur tout substrat plastique ou papier, par une impression numérique à encre en poudre, **caractérisée en ce qu'**elle comporte des moyens de traitement (6, 65, 11, 12, 13) arrangés pour appliquer selon des cycles déterminés au moins une pression et une température définies, avec une variation de la température et/ou de la pression au cours d'un même cycle de lamination, pendant une durée déterminée sur un ou plusieurs substrats imprimés ou sur un empilage comportant une pluralité de substrats imprimés.

9. Presse selon la revendication 8, **caractérisée en ce que** les moyens de traitement comportent des plateaux chauffants (11,12) dont au moins un est actionné par un moyen (13) d'appliquer une pression à l'empilage comportant des plaques (50) de séparant entre eux les substrats imprimés.

10. Presse selon la revendication 9, **caractérisée en ce que** les plateaux (11, 12) et/ou les plaques (50) comportent au moins un aspect de surface pour façonner le document et sont protégés par un film (35, 36) de matériau d'une part supportant des températures de l'ordre de 200°C sans adhérer aux plateau ou aux plaques, d'autre part ayant une bonne conductibilité thermique pour assurer le chauffage des substrats et enfin ayant une faible épaisseur assurant une perméabilité perméable à l'aspect de surface de la plaque (50) ou d'un des plateaux (11, 12) pour permettre la reproduction de cet aspect de surface sur le document.

11. Presse selon la revendication 8 ou 9, **caractérisée en ce que** les moyens de traitement comportent un système (6) de contrôle commandant la presse en appliquant des consignes en température, pression et durée de chacun des paramètres répondant à un cycle défini.

12. Presse selon la revendication 11, **caractérisée en ce que** les valeurs des paramètres déterminant le cycle, dépendent du matériau utilisé et sont mémorisés dans des moyens de mémoire (65) du moyen de contrôle.

13. Presse selon la revendication 10, **caractérisée en ce que** le film (35, 36) de protection des plateaux (11, 12) ou des plaques (50) fait partie intégrante de ces derniers.

## Claims

1. Method of laminating documents printed on any paper or plastic substrate (33, 34, 39) by digital printing with toner, **characterised in that** it comprises at least the following steps:
- printing of an image supplied by a computer file onto one face of at least one substrate (33, 34, 39) by digital printing with toner;
- protection of the element (50, 11, 12) coming into contact with the printed face by means of a film (35, 36),
- application of pressure and temperature, with a variation of the temperature and/or the pressure in the course of one and the same lamination cycle, on the printed substrate or a stack of printed substrates in a defined cycle in order to obtain glazing of the toner deposited on the substrate or substrates.

2. Method as claimed in Claim 1, **characterised in that** the substrate (31) printed on one face is assembled with another similar substrate in such a way that by affixing the two substrates (31, 32) on the unprinted sides to a third intermediate substrate (3 0) a final product is obtained which is printed on broth sides with a defined thickness forming an assembly (3), then at least one assembly (3) is placed between two separating plates (50) or heating plates (11, 21) and laminated with a controlled pressure and temperature in order to be able to obtain jointing of the substrates (30, 31, 32).

3. Method as claimed in Claim 2, **characterised in that** the intermediate substrate (30) includes an active or passive electronic component.

4. Method as claimed in any one of Claims 1 to 3, **characterised in that** it comprises:
- a step of applying a defined pressure (Pi) to the substrates,
- a step of increasing the temperature up to the fixed temperature set point (Ci),
- establishing a temperature set point (Ci) or set points (Ci, C'i), maintaining the temperature at the set point for at least one defined period (Ti, T'i respectively),
- continuous adjustment of the pressure with one (Pi) or more (Pi, P'i) possible changes of pressure for at least a second defiled period (ti, t'i respectively) while the temperature is at a set level,
- a step of cooling the substrates to a defined temperature,
- a step of stopping the pressure.

5. Method as claimed in Claim 4, **characterised in that** it is followed by a step of removal of the protective film (35, 36).

6. Method as claimed in Claim 5, **characterised in that** it is followed by a step of application of a. permanent protection layer (41, 42).

7. Method as claimed in any one of Claims 4 to 6, **characterised in that** at least one set point (Ci, C'i) makes it possible to attain a temperature greater than or equal to 50°C.

8. Press for documents printed on any plastic or paper substrate by digital printing with toner, **characterised in that** it includes processing means (6, 65, 11, 12, 13) arranged so as to apply at least one defined pressure and at least one defined temperature during defined cycles, with a variation of the temperature and/or the pressure in the course of one and the same lamination cycles, during a defined period, to one or more printed substrates or to a stack comprising a plurality of printed substrates.

9. Press as claimed in Claim 8, **characterised in that** the professing means include heating plates (11, 12) of which at least one is actuated by a means (13) for applying a pressure to the stack including plates (50) for separating the printed substrates from one another.

10. Press as claimed in Claim 9, **characterised in that** the heating plates (11, 12) and/or the plates (50) include at least one surface configuration for providing a finish to the document and are protected by a film (35, 36) of material which on the one hand can withstand temperatures of the order of 200 °C without adhering to the heating plates or the separating plates, and on the other hand has a high thermal conductivity to ensure heating of the substrates, and finally has a reduced thickness to ensure permeability to the surface configuration of the separating plate (50) or of one of the heating plates (11, 12) in order to enable the reproduction of this surface configuration on the document.

11. Press as claimed in Claim 8 or Claim 9, **characterised in that** the processing means include a control system (6) to control the press by application of set points for temperature, pressure and duration of each of the parameters corresponding to a defined cycle.

12. Press as claimed in Claim 11, **characterised in that** the values of the parameters determining the cycle are dependent upon the material used and are stored in memory means (65) of the control means.

13. Press as claimed in Claim 10, **characterised in that** the film (35, 36) for protecting the heating plates (11, 12) or separating plates (50) forms an integral part of these plates.

## Patentansprüche

1. Verfahren zum Laminieren von auf jeglichem Papier- oder Kunststoff-Substrat (33, 34, 39) mittels Digitaldruck mit Toner bedruckten Dokumenten, **dadurch gekennzeichnet, dass** es mindestens die folgenden Schritte aufweist:
- Drucken eines von einer Computerdatei bereitgestellten Bildes mittels Digitaldruck mit Toner auf eine Seite mindestens eines Substrates (33, 34, 39),
- Schützen der Elemente (50, 11, 12), die mit der bedruckten Seite in Kontakt kommen, mittels eines Films (35, 36),
- Aufbringen von Druck und Temperatur mit einer Veränderung der Temperatur und/oder des Drucks während eines selben Laminierungszyklus auf das bedruckte Substrat oder einen Stapel von bedruckten Substraten gemäß einem bestimmten Zyklus, um die Versiegelung der auf das oder die Substrate aufgebrachten Toner zu erhalten.

2. Verfahren gemäß Anspruch 1, **dadurch gekennzeichnet, dass** das auf einer Seite bedruckte Substrat (31) mit einem anderen analogen Substrat (32) zusammengefügt wird, so dass durch Anfügen der beiden Substrate (31, 32) auf ihrer nicht bedruckten Seite an ein drittes Zwischensubstrat (30) ein auf der Vorderseite und der Rückseite bedrucktes Endprodukt mit einer bestimmten Dicke verhalten wird, das einen Verbund (3) bildet, wobei dann mindestens ein Verbund (3) zwischen zwei Blättern (50) oder Platten (11, 21) platziert wird und mit einem Druck und einer Temperatur laminiert wird, die gesteuert werden, um das Erhalten einer Verbindung der Substrate (30, 31, 32) zu ermöglichen.

3. Verfahren gemäß Anspruch 2, **dadurch gekennzeichnet, dass** das Zwischensubstrat (30) ein aktives oder passives elektronisches Bauteil aufweist.

4. Verfahren gemäß einem der Ansprüche 1 bis 3, **dadurch gekennzeichnet, dass** es aufweist:
- einen Schritt des Aufbringens eines bestimmten Drucks Pi auf die Substrate,
- einen Schritt des Erhöhens der Temperatur bis zu dem für die Temperatur festgelegten Sollwert Ci,
- das Vorsehen von einer (Ci) oder mehr (Ci, C'i) Temperaturstufen, wobei die Temperatur während zumindest einer festgelegten Dauer (Ti bzw. T'i) auf dem Sollwert gehalten wird,
- ein kontinuierliches Anpassen des Drucks mit einer (Pi) oder mehr (Pi, P'i) möglichen Veränderungen des Drucks während mindestens einer zweiten festgelegten Dauer (ti bzw. t'i) während der Temperaturstufe,
- einen Schritt des Abkühlens der Substrate auf eine festgelegte Temperatur,
- einen Schritt des Abbauens des Drucks.

5. Verfahren gemäß Anspruch 4, **dadurch gekennzeichnet, dass** es von einem Schritt des Entfernens des Schutzfilms (35, 36) gefolgt wird.

6. Verfahren gemäß Anspruch 5, **dadurch gekennzeichnet, dass** es von einem Schritt des Aufbringens einer permanenten Schutzschicht (41, 42) gefolgt wird.

7. Verfahren gemäß einem der Ansprüche 4 bis 6, **dadurch gekennzeichnet, dass** mindestens ein Sollwert (C'i, C'i) das Erreichen einer Temperatur von größer oder gleich 50°C ermöglicht.

8. Presse für ein auf jeglichem Papier- oder Kunststoff-Substrat mittels Digitaldruck mit Toner bedrucktes Dokument, **dadurch gekennzeichnet, dass** sie Verarbeitungsmittel (6, 65, 11, 12, 13) aufweist, die eingerichtet sind, um gemäß bestimmten Zyklen mindestens einen bestimmten Druck und eine bestimmte Temperatur mit einer Änderung der Temperatur und/oder des Drucks im Laufe eines selben Laminierzyklus während einer bestimmten Dauer auf ein oder mehr bedruckte Substrate oder auf einen eine Mehrzahl von bedruckten Substraten aufweisenden Stapel auszubringen.

9. Presse gemäß Anspruch 8, **dadurch gekennzeichnet, dass** die Verarbeitungsmittel Heizplatten (11; 12) aufweisen, von denen mindestens eine von einem Mittel (13) zum Aufbringen eines Drucks auf den Stapel betätigt wird, der Blätter (50) aufweist, die die bedruckten Substrate voneinander trennen.

10. Presse gemäß Anspruch 9, **dadurch gekennzeichnet, dass** die Platten (11, 12) und/oder Blätter (50) mindestens eine Oberflächenerscheinungsform aufweisen, um das Dokument zu bearbeiten, und durch einen Film (35, 36) aus einem Material geschützt sind, das einerseits Temperaturen im Bereich von 200°C standhält, ohne an den Platten oder den Blättern anzukleben, andererseits eine gute thermische Leitfähigkeit besitzt, um das Erhitzen der Substrate zu gewährleisten, und schließlich eine geringe Dicke aufweiset, die eine Durchlässigkeit gewährleistet, die gegenüber der Oberflächenerscheinungsform des Blattes (50) oder einer der Platten (11, 12) durchlässig ist, um die Reproduktion der Oberflächenerscheinungsform auf dem Dokument zu ermöglichen.

11. Presse gemäß Anspruch 8 oder 9, **dadurch gekennzeichnet, dass** die Verarbeitungsmittel ein Steuersystem (6) aufweisen, das die Presse steuert, wobei es Sollwerte bezüglich der Temperatur, des Drucks und der Dauer für jeden der Parameter entsprechend einem festgelegten Zyklus anwendet.

12. Presse gemäß Anspruch 11, **dadurch gekennzeichnet, dass** die Werte der Parameter, die den Zyklus bestimmen, von dem verwendeten Material abhängen und in Speichermitteln (65) des Steuermittels gespeichert sind.

13. Presse gemäß Anspruch 10, **dadurch gekennzeichnet, dass** der Schutzfilm (35, 36) der Platten (11, 12) oder Blätter (50) integrierter Bestandteil derselben ist.
